# EUROPÄISCHE PATENTSCHRIFT

(11) **EP 2 941 554 B1**
(45) Veröffentlichungstag und Bekanntmachung des Hinweises auf die Patenterteilung: **28.06.2017**
(21) Anmeldenummer: 13783237.4
(22) Anmeldetag: 07.10.2013
(51) Int. Cl.: F02B 33/40, F02B 39/02, F02B 39/04, F02B 39/08, F02B 39/10, F02B 39/12, F01N 5/02

(54) **AUFLADEEINRICHTUNG FÜR BRENNKRAFTMASCHINEN**
CHARGING DEVICE FOR INTERNAL COMBUSTION ENGINES
DISPOSITIF DE CHARGE POUR MOTEURS À COMBUSTION INTERNE

(30) Priorität: 08.10.2012 DE 102012019967
(43) Veröffentlichungstag der Anmeldung: 11.11.2015
(73) Patentinhaber: IAV GmbH Ingenieurgesellschaft Auto und Verkehr, 10587 Berlin (DE)
(72) Erfinder: AMBROSIUS, Volker, 01445 Radebeul (DE); DINGEL, Oliver, 09123 Chemnitz (DE); NEUKIRCHNER, Heiko, 09125 Chemnitz (DE); SEMPER, Torsten, 01217 Dresden (DE)
(86) Internationale Anmeldenummer: PCT/DE2013/000579
(87) Internationale Veröffentlichungsnummer: WO 2014/056477

(56) Entgegenhaltungen:
- WO-A2-2009/014488
- DE-A1- 19 960 762
- DE-A1-102006 057 247
- US-A1- 2010 282 221

## Beschreibung

### Technisches Gebiet

Die vorliegende Erfindung betrifft eine Aufladeeinrichtung für Brennkraftmaschinen.

### Stand der Technik

Zur Leistungssteigerung beziehungsweise zur Wirkungsgradverbesserung von Brennkraftmaschinen sind Aufladeeinrichtungen bekannt, um die von der Brennkraftmaschine ausgehende Verlustleistung, insbesondere die von der Brennkraftmaschine bereitgestellte Abwärme zu nutzen. Dazu werden die Aufladeeinrichtungen durch die über das Abgas oder über das Kühlmittel bereitgestellte Abwärme angetrieben. Dazu sind Vorrichtungen bekannt, bei welchen sich der Antrieb der Aufladeeinrichtungen direkt im Kühlmittelkreislauf der Brennkraftmaschine oder direkt im Abgasstrang der Brennkraftmaschine befindet. Andere Konzepte zum Antrieb der Aufladeeinrichtungen verwenden Wärmetauscher, um die im Kühlmittel oder die im Abgas enthaltene Wärme abzuführen, und in einem Kreisprozess zum Antrieb der Aufladeeinrichtung zu verwenden.

Aus der Patentschrift DE 10 2007 026 869 B4 geht eine Kühlvorrichtung mit einem linkslaufenden thermodynamischen Kreisprozess für einen Verbrennungsmotor hervor, bei welcher der Verbrennungsmotor mit einer Aufladeeinrichtung ausgestattet ist und die Aufladeeinrichtung über schaltbare mechanische Kopplungen mit dem Verbrennungsmotor sowie einer elektrischen Maschine und einem Kühlmittelverdichter im Dampfkreislauf des Kreisprozesses verbindbar ist. Mittels der Vorrichtung soll durch das Verdampfen des Kältemittels im Verdampfer mehr Wärme vom Kühlkreislauf des Verbrennungsmotors in den Kältemittelkreislauf übertragen werden, wobei der Kühlmittelverdichter über die Aufladeeinrichtung unter Ausnutzung der Abwärme des Verbrennungsmotors oder über die separate elektrische Maschine antreibbar ist.

Unter Verwendung der dargestellten Vorrichtung ist es jedoch nicht möglich, die von dem Kühlkreislauf des Verbrennungsmotors an den Dampfkreislauf übertragene Wärme für den Antrieb des Verbrennungsmotors, insbesondere zum Antrieb der Aufladeeinrichtung zu nutzen, da kein Expander in dem Dampfkreislauf vorgesehen ist.

Aus der EP2 100 022 B1 geht eine Aufladeeinrichtung zur Aufladung einer Brennkraftmaschine hervor. Im Abgastrakt der Brennkraftmaschine ist ein Abgaswärmetauscher eines geschlossenen Kreislaufsystems eines zirkulierenden Arbeitsmediums untergebracht. In dem Kreislaufsystem ist ein Turbinenteil der Aufladeeinrichtung vorgesehen, das mit dem von dem mindestens einen Abgaswärmetauscher gelieferten überhitzten Arbeitsmedium beaufschlagt wird. Über das Turbinenteil expandiert das überhitzte Arbeitsmedium und treibt ein im Ansaugtrakt der Brennkraftmaschine angeordnetes Verdichterteil an. Das Turbinenteil der Aufladeeinrichtung ist über eine Kopplung mittelbar oder unmittelbar mit einer elektrischen Maschine verbunden. Die elektrische Maschine kann als Generator betrieben werden. Durch die Ansteuerung der elektrischen Maschine kann der Ladedruck im Ansaugtrakt der Verbrennungskraftmaschine geregelt werden. Im Generatormodus der elektrischen Maschine wird der Verdichterteil ausschließlich vom Turbinenteil angetrieben. Des Weiteren wird beschrieben, dass das Turbinenteil mit dem Verdichterteil über eine Kopplung verbunden ist, wobei die Kopplung eine Kupplung enthalten kann. Das Bordnetz des Kraftfahrzeugs wird über das Turbinenteil und die damit mittelbar oder unmittelbar gekoppelte elektrische Maschine versorgt.

Unter Verwendung der bekannten Vorrichtung ist es nicht möglich, während des Schleppbetriebs der Brennkraftmaschine, beispielsweise beim Bremsen oder Ausrollen des Kraftfahrzeugs, Energie zurückzugewinnen. Des Weiteren ist eine Aufladung der Brennkraftmaschine unter bestimmten Bedingungen nicht möglich, wenn beispielsweise die Batterie einen niedrigen Ladezustand aufweist und nur geringe Abwärme und dementsprechend keine oder nur geringe Antriebsleistung am Turbinenteil über das Kreislaufsystem zur Verfügung steht. Ein niedriger Ladezustand der Batterie und eine niedrige Leistung aus dem Dampfkreislauf treten auf, wenn das Kraftfahrzeug überwiegend bei geringen Geschwindigkeiten gefahren wird und zwischenzeitlich immer wieder kurzzeitig die volle Leistung der Brennkraftmaschine beispielsweise zum Überholen benötigt wird. Vor allem bei kleinen Brennkraftmaschinen mit hohem Aufladegrad ist ein verzögerungsfreier Aufbau von Ladedruck notwendig, um einen entsprechenden Fahrkomfort des Kraftfahrzeugs sicherzustellen.

### Aufgabe der Erfindung

Die Aufgabe der Erfindung besteht darin, eine vorteilhafte Aufladeeinrichtung für Brennkraftmaschinen zur Verfügung zu stellen, mit welcher die Energierückgewinnung während des Schleppbetriebs der Brennkraftmaschine und eine Aufladung der Brennkraftmaschine bei geringem Batterieladezustand und geringer Antriebsleistung aus dem Kreislaufsystem ermöglicht wird.

### Lösung der Aufgabe

Die Aufgabe wird durch die Vorrichtung nach den Merkmalen des Patentanspruches 1 gelöst. Vorteilhafte Weiterbildungen ergeben sich aus den Unteransprüchen und dem Ausführungsbeispiel.

### Beschreibung der Erfindung

Die Erfindung stellt eine erfindungsgemäß vorteilhafte Aufladeeinrichtung für Brennkraftmaschinen zur Verfügung, mit welcher die Energierückgewinnung während des Schleppbetriebs der Brennkraftmaschine und eine Aufladung der Brennkraftmaschine bei niedrigem Batterieladezustand und geringer Antriebsleistung aus dem Kreislaufsystem ermöglicht wird.

Die Aufladeeinrichtung für Brennkraftmaschinen verfügt wenigstens über einen Verdichterteil zum Verdichten angesaugter Verbrennungsluft, welcher in einem Ansaugtrakt der Brennkraftmaschine angeordnet ist.

Des Weiteren verfügt die Aufladeeinrichtung über ein Expansionsteil, welches zum Antrieb des Verdichterteils in einem Kreislaufsystem mit einem zirkulierenden Arbeitsmedium positioniert ist. Mit dem Expansionsteil ist eine elektrische Maschine zum Antrieb des Verdichterteils verbunden, welche als Motor oder auch als Generator betrieben werden kann und mit dem Verdichterteil mittelbar oder unmittelbar verbunden ist. Demnach ist das Expansionsteil über die elektrische Maschine mit dem Verdichterteil mittelbar oder unmittelbar verbunden, so dass die vom Expansionsteil bereitgestellte Antriebsleistung auf das Verdichterteil übertragen werden kann.

Das Verdichterteil beziehungsweise das Expansionsteil der Aufladeeinrichtung kann als Strömungsmaschine oder als Kolbenmaschine ausgeführt sein.

Der Antrieb des Expansionsteils im Kreislaufsystem und der damit verbundenen elektrischen Maschine zur Erzeugung elektrischer Energie wird wiederum unter Nutzung der Abwärme der Brennkraftmaschine realisiert. Der Antrieb des Expansionsteils erfolgt durch die Expansion des zirkulierenden Arbeitsmediums, welches vorher durch einen im Abgastrakt der Brennkraftmaschine positionierten Abgaswärmetauscher erhitzt wurde. Weiterhin ist in dem Kreislaufsystem eine Zirkulationspumpe beziehungsweise Speisepumpe vorgesehen.

Die elektrische Maschine ist über eine elektrische Wirkverbindung mit einer Batterie verbunden, um elektrische Energie im Falle einer Energierückgewinnung zu speichern oder elektrische Energie zum Antrieb der elektrischen Maschine bereitzustellen.

Die Aufladeeinrichtung ist erfindungsgemäß vorteilhaft zusätzlich mit der Brennkraftmaschine mechanisch verbindbar. Dazu ist die Aufladeeinrichtung mit einer mechanischen Kopplung versehen, mit welcher die Aufladeeinrichtung mit der Brennkraftmaschine schaltbar verbunden werden kann. Die Kopplung ist derart positioniert, dass wenigstens der Verdichterteil mit der Brennkraftmaschine gekoppelt werden kann.

Die Übertragung der Antriebsleistung vom Expansionsteil zum Verdichterteil kann unmittelbar über eine gemeinsame Welle oder mittelbar über eine schaltbare Kupplung und / oder über ein Getriebe zur Drehzahlübersetzung erfolgen. Die elektrische Maschine kann sich dabei an jeder beliebigen Stelle im Leistungsfluss zwischen Expansionsteil und Verdichterteil befinden. Ist die elektrische Maschine mit dem Verdichterteil mechanisch verbunden, so kann auch eine Kopplung der Brennkraftmaschine mit der elektrischen Maschine über den Verdichterteil erfolgen.

Alternativ kann die Brennkraftmaschine über die schaltbare mechanische Kopplung mit dem Verdichterteil oder der elektrischen Maschine oder dem Verdichterteil und der elektrischen Maschine verbunden werden, wenn die mechanische Kopplung mit der Aufladeeinrichtung zwischen dem Verdichterteil und der elektrischen Maschine verbunden ist.

Die Übertragung der Antriebsleistung von der elektrischen Maschine des Expansionsteils zum Verdichterteil erfolgt in erfindungsgemäß vorteilhafter Weise durch die Übertragung elektrischer Energie, indem der Verdichterteil mit einer weiteren elektrischen Maschine über die elektrische Wirkverbindung verbunden ist. Die als Generator betriebene elektrische Maschine des Expansionsteils erzeugt elektrische Energie, die dann zum Antrieb der weiteren elektrischen Maschine des Verdichterteils genutzt wird. Dazu ist die elektrische Maschine mit dem Verdichterteil über die weitere elektrische Maschine verbunden, wobei die weitere elektrische Maschine einerseits mit der elektrischen Maschine über die elektrische Wirkverbindung und andererseits mit dem Verdichterteil mittelbar oder unmittelbar verbunden ist. Die elektrische Wirkverbindung ist dafür derart ausgeführt, dass zwischen der als Generator betriebenen und durch den Expansionsteil angetriebenen elektrischen Maschine und der weiteren elektrischen Maschine elektrische Energie übertragen werden kann, welche zum Antrieb der weiteren elektrischen Maschine dient.

Erfindungsgemäß vorteilhaft kann die Brennkraftmaschine über die schaltbare mechanische Kopplung mit dem Verdichterteil oder der weiteren elektrischen Maschine oder dem Verdichterteil und der weiteren elektrischen Maschine verbunden werden, wenn die mechanische Kopplung mit der Aufladeeinrichtung zwischen dem Verdichterteil und der weiteren elektrischen Maschine verbunden ist.

Die Kopplungseinrichtung kann als eine einfache Drehmomentübertragung ohne Übersetzung oder über ein Getriebe mit einer konstanten Übersetzung zwischen Drehzahl der Aufladeeinrichtung und der Brennkraftmaschine ausgeführt sein. Die Kopplungseinrichtung kann demnach als Ketten- oder Riementrieb, als Zahnrad- oder Reibradgetriebe oder weitere Getriebearten ausgeführt sein.

Erfindungsgemäß vorteilhaft kann die Kopplungseinrichtung als ein Getriebe mit variabler Übersetzung ausgeführt sein, so dass die Drehzahl der Aufladeeinrichtung gegenüber der Drehzahl der Brennkraftmaschine innerhalb von vordefinierten Übersetzungsgrenzen variiert werden kann. Die Kopplungseinrichtung kann demnach als variables Getriebe, wie Stufengetriebe beziehungsweise Schaltgetriebe oder kontinuierlich variables Getriebe, wie Toroidgetriebe, Kegelringgetriebe oder variable Zugmittelgetriebe ausgeführt sein.

Weiterhin kann die Kopplungseinrichtung über eine schaltbare Kupplung verfügen, um die mechanische Verbindung von Aufladeeinrichtung und Brennkraftmaschine zu unterbrechen. Die schaltbare Kupplung kann derart ausgeführt sein, dass mehrere Schaltstellungen realisiert werden, um verschiedene Leistungswege oder Leistungsverzweigungen zu realisieren. Dadurch können beispielsweise über die schaltbare mechanische Kopplung der Verdichterteil oder die elektrische Maschine oder beide mit der Brennkraftmaschine verbunden werden.

Weiterhin kann die Kopplungseinrichtung über einen Freilauf verfügen, um die mechanische Verbindung von Aufladeeinrichtung und Brennkraftmaschine bei sich ändernden Lastverhältnissen zu unterbrechen.

Über die mechanische Kopplungseinrichtung zur mechanischen Verbindung von Aufladeeinrichtung und Brennkraftmaschine kann während des Schleppbetriebs der Brennkraftmaschine, also in Brems- oder Rollphasen des Kraftfahrzeugs, kinetische Energie über den Antriebsstrang an die elektrische Maschine der Aufladeeinrichtung übertragen, rekuperiert und dann als elektrische Energie in einer Batterie an Bord des Kraftfahrzeugs gespeichert werden. Durch die mechanische Kopplung der Aufladeeinrichtung und der darin vorgesehenen elektrischen Maschine mit der Brennkraftmaschine kann eine Energierückgewinnung bei bestimmten Fahrzuständen des Kraftfahrzeugs erreicht werden.

Die elektrische Wirkverbindung ist dafür derart ausgeführt, dass die von der als Generator betriebene und durch den Expansionsteil angetriebene elektrische Maschine und / oder die von der als Generator betriebene und durch die Brennkraftmaschine angetriebene weitere elektrische Maschine erzeugte elektrische Energie übertragen und in der Batterie gespeichert werden kann.

Des Weiteren kann durch die mechanische Kopplung eine Aufladung der Brennkraftmaschine gewährleistet werden, auch wenn die dafür notwendige Antriebsleistung weder aus der Batterie, noch aus dem Kreislaufsystem zur Verfügung steht. Dann wird durch die mechanische Kopplung der Aufladeeinrichtung die für die Aufladung notwendige Antriebsleistung von der Brennkraftmaschine bereitgestellt, ohne auf die elektrische Energie aus der Batterie bei geringem Ladezustand oder auf die thermische Energie aus dem Kreislaufsystem bei geringer Abwärmenutzung zuzugreifen.

Die elektrische Wirkverbindung kann derart ausgeführt sein, dass zwischen der Batterie und der weiteren elektrischen Maschine elektrische Energie übertragen werden kann, welche zum Antrieb der weiteren elektrischen Maschine und somit des Verdichterteils dient, wenn keine Abwärme zum Antrieb des Expansionsteils und somit zur Erzeugung von elektrischer Energie durch die elektrische Maschine und nur geringe Antriebsleistung für den Verdichterteil von der Brennkraftmaschine zur Verfügung steht.

### Ausführungsbeispiel 1

Beispielhaft wird hier eine Ausführung der erfindungsgemäßen Vorrichtung dargestellt. In der dazugehörigen Figur zeigt:

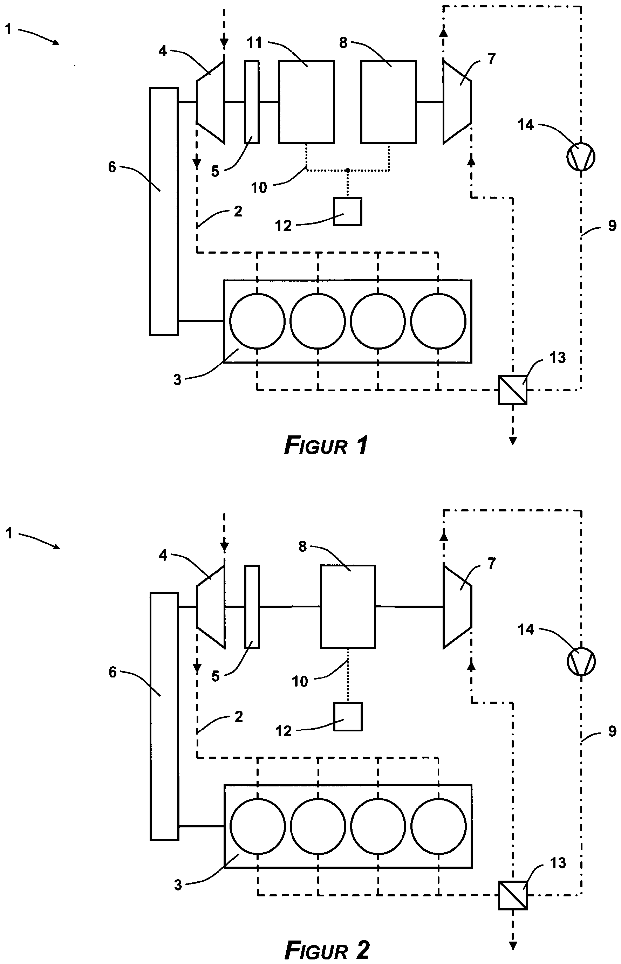

**FIGUR 1**: eine schematische Darstellung einer ersten Ausführungsform einer Aufladeeinrichtung.

Die erfindungsgemäße Aufladeeinrichtung (**1**) für Brennkraftmaschinen besteht aus einem in einem Ansaugtrakt (**2**) einer Brennkraftmaschine (**3**) angeordneten Verdichterteil (**4**), welcher einerseits mit einer schaltbaren Kupplung (**5**) und andererseits über eine schaltbare mechanische Kopplung (**6**) mit der Brennkraftmaschine (**3**) verbunden ist. Des Weiteren ist die Aufladeeinrichtung (**1**) mit einem Expansionsteil (**7**) und einer damit verbundenen elektrischen Maschine (**8**) ausgestattet. Die elektrische Maschine (**8**) kann als Generator betrieben werden, indem die elektrische Maschine (**8**) durch den Expansionsteil (**7**) angetrieben wird. Der Expansionsteil (**7**) befindet sich in einem Kreislaufsystem (**9**) eines zirkulierenden Arbeitsmediums, welches die Abwärme der Brennkraftmaschine (**3**) zum Antrieb des Turbinenteils (**7**) nutzt. Zur Nutzung der Abwärme der Brennkraftmaschine (**3**) sind in dem Kreislaufsystem (**9**) wenigstens ein Abgaswärmetauscher (**13**) und eine Zirkulationspumpe (**14**) vorgesehen.

Über eine elektrische Wirkverbindung (**10**) kann zwischen der als Generator betriebenen und durch den Expansionsteil (**7**) angetriebenen elektrischen Maschine (**8**) und einer weiteren elektrischen Maschine (**11**) elektrische Energie übertragen werden, welche zum Antrieb des Verdichterteils (**4**) dient.

Über die schaltbare Kupplung (**5**) kann der Verdichterteil (**4**) mit der weiteren elektrischen Maschine (**11**) verbunden oder nicht verbunden werden. Über die schaltbare mechanische Kopplung (**6**) kann der Verdichterteil (**4**) mit der Brennkraftmaschine (**3**) verbunden oder nicht verbunden werden. Eine Batterie (**12**) ist ebenfalls mit der elektrischen Wirkverbindung (**10**) verbunden, um elektrische Energie im Falle einer Energierückgewinnung zu speichern oder elektrische Energie zum Antrieb der weiteren elektrischen Maschine (**11**) bereitzustellen.

### Ausführungsbeispiel 2

Beispielhaft wird hier eine Ausführung der erfindungsgemäßen Vorrichtung dargestellt. In der dazugehörigen Figur zeigt:
**FIGUR 2**: eine schematische Darstellung einer zweiten Ausführungsform einer Aufladeeinrichtung.

Die erfindungsgemäße Aufladeeinrichtung (**1**) für Brennkraftmaschinen besteht aus einem in einem Ansaugtrakt (**2**) einer Brennkraftmaschine (**3**) angeordneten Verdichterteil (**4**), welcher einerseits über eine schaltbare Kupplung (**5**) mit einer elektrischen Maschine (**8**) und andererseits über eine schaltbare mechanische Kopplung (**6**) mit der Brennkraftmaschine (**3**) verbunden ist. Über die schaltbare Kupplung (**5**) kann der Verdichterteil (**4**) mit der elektrischen Maschine (**8**) verbunden oder nicht verbunden werden. Über die schaltbare mechanische Kopplung (**6**) kann der Verdichterteil (**4**) mit der Brennkraftmaschine (**3**) verbunden oder nicht verbunden werden. Des Weiteren weist die Aufladeeinrichtung (**1**) einen mit der elektrischen Maschine(**8**) verbundenen Expansionsteil (**7**) auf. Der Expansionsteil (**7**) befindet sich in einem Kreislaufsystem (**9**) eines zirkulierenden Arbeitsmediums, welches die Abwärme der Brennkraftmaschine (**3**) zum Antrieb des Expansionsteils (**7**) nutzt. Zur Nutzung der Abwärme der Brennkraftmaschine (**3**) sind in dem Kreislaufsystem (**9**) wenigstens ein Abgaswärmetauscher (**13**) und eine Zirkulationspumpe (**14**) vorgesehen. Über eine elektrische Wirkverbindung (**10**) ist eine Batterie (**12**) mit der elektrischen Maschine (**8**) verbunden, um elektrische Energie im Falle einer Energierückgewinnung zu speichern oder elektrische Energie zum Antrieb des Verdichterteils (**4**) bereitzustellen.

Die elektrische Maschine (**8**) kann als Generator betrieben werden, indem die elektrische Maschine (**8**) durch den Expansionsteil (**7**) oder durch die mittels der mechanischen Kopplung (**6**) verbundene Brennkraftmaschine (**3**) angetrieben wird. Des Weiteren kann mit der elektrischen Maschine (**8**) im Motorbetrieb der Verdichterteil (**4**) angetrieben werden, wenn keine Antriebsleistung aus der Abwärmenutzung zur Verfügung steht. Alternativ kann der Verdichterteil (**4**) über die direkte Verbindung zum Expansionsteil (**7**) direkt angetrieben werden, ohne dass die elektrische Maschine (**8**) als Generator oder Motor betrieben wird. Zur Steuerung der Aufladung der Brennkraftmaschine (**3**) kann die elektrische Maschine (**8**) als Generator oder als Motor in jedem beliebigen Arbeitspunkt betrieben werden.

### Ausführungsbeispiel 3

Beispielhaft wird hier eine Ausführung der erfindungsgemäßen Vorrichtung dargestellt. In der dazugehörigen Figur zeigt:

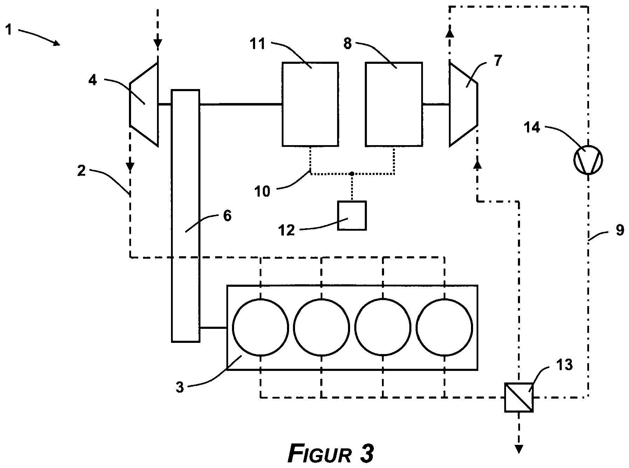

**FIGUR 3**: eine schematische Darstellung einer dritten Ausführungsform einer Aufladeeinrichtung.

Die erfindungsgemäße Aufladeeinrichtung (**1**) für Brennkraftmaschinen besteht aus einem in einem Ansaugtrakt (**2**) einer Brennkraftmaschine (**3**) angeordneten Verdichterteil (**4**), welcher über eine schaltbare mechanische Kopplung (**6**) mit der Brennkraftmaschine (**3**) verbunden ist. Des Weiteren ist die Aufladeeinrichtung **(1)** mit einem Expansionsteil (**7**) und einer damit verbundenen elektrischen Maschine (**8**) ausgestattet. Die elektrische Maschine (**8**) kann als Generator betrieben werden, indem die elektrische Maschine (**8**) durch den Expansionsteil (**7**) angetrieben wird. Der Expansionsteil (**7**) befindet sich in einem Kreislaufsystem (**9**) eines zirkulierenden Arbeitsmediums, welches die Abwärme der Brennkraftmaschine (**3**) zum Antrieb des Expansionsteils (**7**) nutzt. Zur Nutzung der Abwärme der Brennkraftmaschine (**3**) sind in dem Kreislaufsystem (**9**) wenigstens ein Abgaswärmetauscher (**13**) und eine Zirkulationspumpe (**14**) vorgesehen.

Über eine elektrische Wirkverbindung (**10**) kann zwischen der als Generator betriebenen und durch den Expansionsteil (**7**) angetriebenen elektrischen Maschine (**8**) und einer weiteren elektrischen Maschine (**11**) elektrische Energie übertragen werden, welche zum Antrieb des Verdichterteils (**4**) dient.

Über die schaltbare mechanische Kopplung (**6**) kann der Verdichterteil (**4**) mit der weiteren elektrischen Maschine (**11**) verbunden oder nicht verbunden werden. Über die schaltbare mechanische Kopplung (**6**) kann der Verdichterteil (**4**) mit der
Brennkraftmaschine (**3**) verbunden oder nicht verbunden werden. Über die schaltbare mechanische Kopplung (**6**) kann die weitere elektrische Maschine (**11**) mit der Brennkraftmaschine (**3**) verbunden oder nicht verbunden werden.

Eine Batterie (**12**) ist ebenfalls mit der elektrischen Wirkverbindung (**10**) verbunden, um elektrische Energie im Falle einer Energierückgewinnung zu speichern oder elektrische Energie zum Antrieb der weiteren elektrischen Maschine (**11**) bereitzustellen.

### Aufstellung der verwendeten Bezugszeichen

- 1: Aufladeeinrichtung
- 2: Ansaugtrakt
- 3: Brennkraftmaschine
- 4: Verdichterteil
- 5: schaltbare Kupplung
- 6: mechanische Kopplung
- 7: Expansionsteil
- 8: elektrische Maschine
- 9: Kreislaufsystem
- 10: elektrische Wirkverbindung
- 11: weitere elektrische Maschine
- 12: Batterie
- 13: Abgaswärmetauscher
- 14: Zirkulationspumpe

## Patentansprüche

1. Aufladeeinrichtung (**1**) für Brennkraftmaschinen (**3**),
umfassend wenigstens einen in einem Ansaugtrakt (**2**) der Brennkraftmaschine (**3**) angeordneten Verdichterteil (**4**) zum Verdichten angesaugter Verbrennungsluft, welcher über eine schaltbare mechanische Kopplung (**6**) mit der Brennkraftmaschine (**3**) verbindbar ist,
umfassend wenigstens einen in einem Kreislaufsystem (**9**) eines zirkulierenden Arbeitsmediums angeordneten Expansionsteil (**7**), wobei sich zum Antrieb des Expansionsteils (**7**) unter Nutzung der Abwärme der Brennkraftmaschine (**3**) weiterhin wenigstens ein Abgaswärmetauscher (**13**) und eine Zirkulationspumpe (**14**) in dem Kreislaufsystem (**9**) befinden,
umfassend eine mit dem Expansionsteil (**7**) verbundene elektrische Maschine (**8**) zum Antrieb des Verdichterteils (**4**), wobei die elektrische Maschine (**8**) mit dem Verdichterteil (**4**) mittelbar oder unmittelbar verbunden ist,
umfassend eine elektrische Wirkverbindung (**10**) zwischen der elektrischen Maschine (**8**) und einer Batterie (**12**), um elektrische Energie im Falle einer Energierückgewinnung zu speichern oder elektrische Energie zum Antrieb der elektrischen Maschine (**8**) bereitzustellen, so dass eine Energierückgewinnung während eines Schleppbetriebs der Brennkraftmaschine (**3**) und eine Aufladung der Brennkraftmaschine (**3**) bei einem geringen Batterieladezustand und einer geringen Antriebsleistung aus dem Kreislaufsystem (**9**) ermöglicht wird.

2. Aufladeeinrichtung (**1**) für Brennkraftmaschinen (**3**) nach Patentanspruch 1, **dadurch gekennzeichnet, dass** die elektrische Maschine (**8**) mit dem Verdichterteil (**4**) über eine schaltbare Kupplung (**5**) verbindbar ist.

3. Aufladeeinrichtung (**1**) für Brennkraftmaschinen (**3**) nach Patentanspruch 1, **dadurch gekennzeichnet, dass** die Brennkraftmaschine (**3**) über die schaltbare mechanische Kopplung (**6**) mit dem Verdichterteil (**4**) oder der elektrischen Maschine (**8**) oder dem Verdichterteil (**4**) und der elektrischen Maschine (**4**) verbindbar ist.

4. Aufladeeinrichtung (**1**) für Brennkraftmaschinen (**3**) nach Patentanspruch 1, **dadurch gekennzeichnet, dass** die elektrische Maschine (**8**) mit dem Verdichterteil (**4**) über eine weitere elektrische Maschine (**11**) verbunden ist, wobei die weitere elektrische Maschine (**11**) einerseits mit der elektrischen Maschine (**8**) über die elektrische Wirkverbindung (**10**) und andererseits mit dem Verdichterteil (**4**) mittelbar oder unmittelbar verbunden ist.

5. Aufladeeinrichtung (**1**) für Brennkraftmaschinen (**3**) nach Patentanspruch 4, **dadurch gekennzeichnet, dass** die weitere elektrische Maschine (**11**) mit dem Verdichterteil (**4**) über eine schaltbare Kupplung (**5**) verbindbar ist.

6. Aufladeeinrichtung (**1**) für Brennkraftmaschinen (**3**) nach Patentanspruch 4, **dadurch gekennzeichnet, dass** die Brennkraftmaschine (**3**) über die schaltbare mechanische Kopplung (**6**) mit dem Verdichterteil (**4**) oder der weiteren elektrischen Maschine (**11**) oder dem Verdichterteil (**4**) und der weiteren elektrischen Maschine (**11**) verbindbar ist.

7. Aufladeeinrichtung (**1**) für Brennkraftmaschinen (**3**) nach einem der vorherigen Ansprüche 4 bis 6, **dadurch gekennzeichnet, dass** die elektrische Wirkverbindung (**10**) derart ausgeführt ist, dass zwischen der als Generator betriebenen und durch den Expansionsteil (**7**) angetriebenen elektrischen Maschine (**8**) und der weiteren elektrischen Maschine (**11**) elektrische Energie übertragen werden kann, welche zum Antrieb der weiteren elektrischen Maschine (**11**) dient.

8. Aufladeeinrichtung (**1**) für Brennkraftmaschinen (**3**) nach einem der vorherigen Ansprüche 4 bis 7, **dadurch gekennzeichnet, dass** die elektrische Wirkverbindung (**10**) derart ausgeführt ist, dass zwischen der Batterie (**12**) und der weiteren elektrischen Maschine (**11**) elektrische Energie übertragen werden kann, welche zum Antrieb der weiteren elektrischen Maschine (**11**) dient.

9. Aufladeeinrichtung (**1**) für Brennkraftmaschinen (**3**) nach einem der vorherigen Ansprüche 4 bis 8, **dadurch gekennzeichnet, dass** die elektrische Wirkverbindung (**10**) derart ausgeführt ist, dass die von der als Generator betriebene und durch den Expansionsteil (**7**) angetriebene elektrischen Maschine (**8**) und / oder die von der als Generator betriebene und durch die Brennkraftmaschine (**3**) angetriebene weiteren elektrischen Maschine (**11**) erzeugte elektrische Energie übertragen und in der Batterie (**12**) gespeichert werden kann.

## Claims

1. Supercharging device (**1**) for internal combustion engines (**3**), comprising at least one compressor part (**4**), which is arranged in an intake tract (**2**) of the internal combustion engine (**3**) and which serves for compressing inducted combustion air and which is connectable by means of a switchable mechanical coupling (**6**) to the internal combustion engine (**3**),
comprising at least one expansion part (**7**) which is arranged in a circuit system (**9**) of a circulating working medium, wherein, for the drive of the expansion part (**7**) utilizing the waste heat of the internal combustion engine (**3**), it is furthermore the case that at least one exhaust-gas heat exchanger (**13**) and one circulation pump (**14**) are situated in the circuit system (**9**),
comprising an electric machine (**8**), which is connected to the expansion part (**7**) and which serves for driving the compressor part (**4**), wherein the electric machine (**8**) is indirectly or directly connected to the compressor part (**4**),
comprising an electrical operative connection (**10**) between the electric machine (**8**) and a battery (**12**) for storing electrical energy in an energy recovery situation or for making electrical energy available for the drive of the electric machine (**8**), such that energy recovery is made possible during overrun operation of the internal combustion engine (**3**), and supercharging of the internal combustion engine (**3**) is made possible in the presence of a low battery state of charge and low drive power from the circuit system (**9**).

2. Supercharging device (**1**) for internal combustion engines (**3**) according to Patent Claim 1, **characterized in that** the electric machine (**8**) is connectable to the compressor part (**4**) by means of a switchable clutch (**5**).

3. Supercharging device (**1**) for internal combustion engines (**3**) according to Patent Claim 1, **characterized in that** the internal combustion engine (**3**) is connectable by means of the switchable mechanical coupling (**6**) to the compressor part (**4**) or to the electric machine (**8**) or to the compressor part (**4**) and the electric machine (**8**).

4. Supercharging device (**1**) for internal combustion engines (**3**) according to Patent Claim 1, **characterized in that** the electric machine (**8**) is connected to the compressor part (**4**) by means of a further electric machine (**11**), wherein the further electric machine (**11**) is at one side connected to the electric machine (**8**) by means of the electrical operative connection (**10**) and is at the other side connected indirectly or directly to the compressor part (**4**).

5. Supercharging device (**1**) for internal combustion engines (**3**) according to Patent Claim 4, **characterized in that** the further electric machine (**11**) is connectable to the compressor part (**4**) by means of a switchable clutch (**5**).

6. Supercharging device (**1**) for internal combustion engines (**3**) according to Patent Claim 4, **characterized in that** the internal combustion engine (**3**) is connectable by means of the switchable mechanical coupling (**6**) to the compressor part (**4**) or to the further electric machine (**11**) or to the compressor part (**4**) and the further electric machine (**11**).

7. Supercharging device (**1**) for internal combustion engines (**3**) according to one of the preceding Claims 4 to 6, **characterized in that** the electrical operative connection (**10**) is configured such that electrical energy can be transmitted between the electric machine (**8**), the latter being operated as a generator and driven by the expansion part (**7**), and the further electric machine (**11**), which electrical energy serves for the drive of the further electric machine (**11**).

8. Supercharging device (**1**) for internal combustion engines (**3**) according to one of the preceding Claims 4 to 7, **characterized in that** the electrical operative connection (**10**) is configured such that electrical energy can be transmitted between the battery (**12**) and the further electric machine (**11**), which electrical energy serves for the drive of the further electric machine (**11**).

9. Supercharging device (**1**) for internal combustion engines (**3**) according to one of the preceding Claims 4 to 8, **characterized in that** the electrical operative connection (**10**) is designed such that the electrical energy generated by the electric machine (**8**), the latter being operated as a generator and driven by the expansion part (**7**), and/or the electrical energy generated by the further electric machine (**11**), the latter being operated as a generator and driven by the internal combustion engine (**3**), can be transmitted and stored in the battery (**12**).

## Revendications

1. Dispositif de charge (1) pour des moteurs à combustion interne (3),
comprenant au moins une partie de compresseur (4) disposée dans une ligne d'aspiration (2) du moteur à combustion interne (3) pour la compression de l'air de combustion aspiré, qui peut être reliée au moteur à combustion interne (3) au moyen d'un couplage mécanique commutable (6),
comprenant au moins une partie de détente (7) disposée dans un système de circuit (9) d'un fluide de travail en circulation, dans lequel il se trouve en outre dans le système de circuit (9) au moins un échangeur de chaleur à gaz d'échappement (13) et une pompe de circulation (14) pour l'entraînement de la partie de détente (7) avec utilisation de la chaleur perdue du moteur à combustion interne (3),
comprenant une machine électrique (8) reliée à la partie de détente (7) pour l'entraînement de la partie de compresseur (4), dans lequel la machine électrique (8) est reliée indirectement ou directement à la partie de compresseur (4),
comprenant une liaison active électrique (10) entre la machine électrique (8) et une batterie (12), afin d'accumuler de l'énergie électrique dans le cas d'une récupération d'énergie ou de fournir de l'énergie électrique pour l'entraînement de la machine électrique (8), de telle manière qu'une récupération d'énergie pendant un fonctionnement remorqué du moteur à combustion interne (3) et une charge du moteur à combustion interne (3) lors d'un état de charge faible de la batterie et d'une faible puissance d'entraînement à partir du système de circuit (9) soit possible.

2. Dispositif de charge (1) pour des moteurs à combustion interne (3) selon la revendication 1, **caractérisé en ce que** la machine électrique (8) peut être reliée à la partie de compresseur (4) au moyen d'un embrayage commutable (5).

3. Dispositif de charge (1) pour des moteurs à combustion interne (3) selon la revendication 1, **caractérisé en ce que** le moteur à combustion interne (3) peut être relié, par le couplage mécanique commutable (6), à la partie de compresseur (4) ou à la machine électrique (8) ou à la partie de compresseur (4) et à la machine électrique (8).

4. Dispositif de charge (1) pour des moteurs à combustion interne (3) selon la revendication 1, **caractérisé en ce que** la machine électrique (8) est reliée à la partie de compresseur (4) au moyen d'une autre machine électrique (11), dans lequel l'autre machine électrique (11) est reliée indirectement ou directement d'une part à la machine électrique (8) au moyen de la liaison active électrique (10) et d'autre part à la partie de compresseur (4).

5. Dispositif de charge (1) pour des moteurs à combustion interne (3) selon la revendication 4, **caractérisé en ce que** l'autre machine électrique (11) peut être reliée à la partie de compresseur (4) au moyen d'un embrayage commutable (5).

6. Dispositif de charge (1) pour des moteurs à combustion interne (3) selon la revendication 4, **caractérisé en ce que** le moteur à combustion interne (3) peut être relié au moyen du couplage mécanique commutable (6) à la partie de compresseur (4) ou à l'autre machine électrique (11) ou à la partie de compresseur (4) et à l'autre machine électrique (11).

7. Dispositif de charge (1) pour des moteurs à combustion interne (3) selon l'une quelconque des revendications précédentes 4 à 6, **caractérisé en ce que** la liaison active électrique (10) est réalisée de telle manière qu'il soit possible de transférer entre la machine électrique (8) fonctionnant en générateur et entraînée par la partie de détente (7) et l'autre machine électrique (11) de l'énergie électrique, qui sert pour l'entraînement de l'autre machine électrique (11).

8. Dispositif de charge (1) pour des moteurs à combustion interne (3) selon l'une quelconque des revendications précédentes 4 à 7, **caractérisé en ce que** la liaison active électrique (10) est réalisée de telle manière qu'il soit possible de transférer entre la batterie (12) et l'autre machine électrique (11) de l'énergie électrique, qui sert pour l'entraînement de l'autre machine électrique (11).

9. Dispositif de charge (1) pour des moteurs à combustion interne (3) selon l'une quelconque des revendications précédentes 4 à 8, **caractérisé en ce que** la liaison active électrique (10) est réalisée de telle manière qu'il soit possible de transférer l'énergie électrique produite par la machine électrique (8) fonctionnant en générateur et entraînée par la partie de détente (7) et/ou l'énergie électrique produite par l'autre machine électrique (11) fonctionnant en générateur et entraînée par le moteur à combustion interne (3) et de l'accumuler dans la batterie (12).
